# EUROPEAN PATENT SPECIFICATION

(11) **EP 3 089 442 B1**
(45) Date of publication and mention of the grant of the patent: **05.01.2022**
(21) Application number: 14873199.5
(22) Date of filing: 12.11.2014
(51) Int. Cl.: H04N 5/238, H04N 5/235, H04N 5/225, G06K 9/00, G06K 9/20, H04N 13/239, H04N 13/296

(54) **VEHICLE-MOUNTED IMAGE RECOGNITION DEVICE**
FAHRZEUGMONTIERTE BILDERKENNUNGSVORRICHTUNG
DISPOSITIF DE RECONNAISSANCE D'IMAGE EMBARQUÉ

(30) Priority: 25.12.2013 JP 2013267292
(43) Date of publication of application: 02.11.2016
(73) Proprietor: Hitachi Astemo, Ltd., Hitachinaka-shi, Ibaraki 312-8503 (JP)
(72) Inventor: KOROGI, Naoki, Hitachinaka-shi Ibaraki 312-8503 (JP); OTSUKA,Yuji, Hitachinaka-shi Ibaraki 312-8503 (JP)
(74) Representative: MERH-IP Matias Erny Reichl Hoffmann Patentanwälte PartG mbB
(86) International application number: PCT/JP2014/079902
(87) International publication number: WO 2015/098325

(56) References cited:
- JP-A- 2007 286 943
- JP-A- 2008 134 844
- JP-A- 2009 065 586
- JP-A- 2011 234 318
- JP-A- 2013 237 389
- JP-A- 2013 237 389
- None

## Description

### Technical Field

The present invention relates to an in-vehicle camera, and particularly to an in-vehicle image recognition device having a function of simultaneously recognizing a plurality of targets such as a preceding vehicle, a white lane, a pedestrian, and a light source.

### Background Art

In recent years, light sources used in a traffic signal and a traffic sign of an electric light display type are replaced from the conventional incandescent lamps to LEDs. The LED has a merit on less power consumption and long life span compared to the incandescent lamp. In addition, there is no pseudo lighting considered as emission caused by the reflection of sunlight, so that the visibility is high and also the stability is improved.

The LED used in the traffic signal and the traffic sign is flickered to be repeatedly on and off at a high speed when being turned on. A cycle of the flickering is 100 Hz in a region of 50 Hz commercial power source or 120 Hz in a region of 60 Hz commercial power source. The flickering is performed at a high speed, and thus it appears to person as always turned on.

In a case where the exposure timing of an in-vehicle camera is matched to the OFF state of the flickering light source, the emission light of the light source is not recorded in the image obtained from the camera. In addition, in a case where the capturing cycle of the camera is close to an integer times the cycle of the flickering light source, the above problem continuously occurs in a plurality of frames.

In order to solve the above problem, for example, PTL 1 discloses a technique in which a number of imaging units are provided to capture an image while deviating the exposure timings in a time shorter than a flickering cycle of the flickering light source and to observe a change in brightness of the light source in order to recognize the flickering light source.

### Citation List

### Patent Literature

PTL 1: Japanese Patent Application Laid-Open No. 2007-286943

In JP 2013 237389 A a lamplight detecting device and a vehicle control system are described. For an image analyzing device an image of a host vehicle front area common to a right camera and a left camera is taken with the control of the stereo camera and image data, expressing the taken image is generated. The exposure timing of the left and right camera are controlled such that the exposure timing for the left camera is shifted from the exposure timing for the right camera.

In JP 2009 065586 A an on-vehicle camera including an image sensor for imaging a scene in front of a vehicle and a control of a controlling shutter timing of imaging of the image sensor is described.

### Summary of Invention

### Technical Problem

However, in the conventional technique described above, an image is acquired in a cycle Tled shorter than the flickering cycle of the light source, and a recognition process is performed on each image, thereby significantly increasing a processing load. In addition, since a number of images are transferred from an imaging unit to a recognition unit, a transfer amount of a bus may be significantly expanded. An in-vehicle camera having an image recognition function is requested for simultaneously recognizing a number of objects such as a preceding vehicle, a pedestrian, and a white lane on a road. Therefore, when the processing load and the bus transfer amount are increased, it becomes difficult to be compatible with the other recognition processing. In addition, since more imaging units are required, the cost is increased.

The invention has been made in view of the above problems, and an object thereof is to provide an in-vehicle imaging device which can improve a performance of recognizing the flickering light source at a low cost without causing a degradation of an image recognition application such as a preceding vehicle recognition and a white lane recognition.

### Solution to Problem

An in-vehicle image recognition device according to the present invention in order to solve the above issue is defined in claim 1. Preferred embodiments of the invention are set out in dependent claims.

### Advantageous Effects of Invention

According to the invention, the visibility of a flickering light source can be improved at a low cost without causing a degradation of the performance of an image recognition application such as a preceding vehicle recognition and a white lane recognition. Further, other objects, configurations, and effects will become clear through the explanation of the following embodiments.

### Brief Description of Drawings

[FIG. 1] FIG. 1 is a block diagram for describing functions of an in-vehicle image recognition device.
[FIG. 2] FIG. 2 is a diagram illustrating an example of flickering of a flickering light source and exposure timings of a first imaging unit and a second imaging unit.
[FIG. 3] FIG. 3 is a flowchart illustrating an exemplary operation of an exposure timing adjustment unit. Description of Embodiments

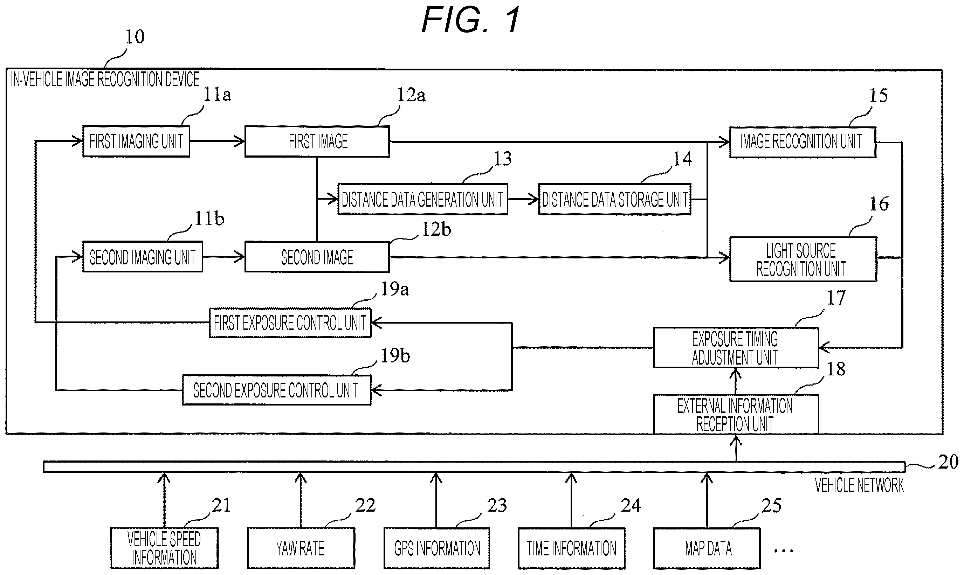

Next, embodiments of the invention will be described below using the drawings. FIG. 1 is a functional block diagram illustrating an example of an in-vehicle image recognition device in this embodiment.

An in-vehicle image recognition device 10 is a device which alternately captures an image at a different timing using a first imaging unit 11a and a second imaging unit 11b which are paired in an in-vehicle camera, detects a flickering light source from one or both of a first image 12a obtained from the first imaging unit 11a and a second image 12b obtained from the second imaging unit 11b, and performs exposure using the first imaging unit 11a and the second imaging unit 11b in synchronization with timing of turning on the flickering light source from next time, so that the flickering light source is recognized with high accuracy without causing degradation of the performance of an image recognition function.

The in-vehicle image recognition device 10 is a stereo camera which is mounted in a vehicle and, as described in the drawing, provided with the first imaging unit 11a and the second imaging unit 11b, a distance data generation unit 13 which generates distance information based on the first image 12a and the second image 12b acquired by the first imaging unit 11a and the second imaging unit 11b, a distance data storage unit 14 which stores the distance information indicating a distance to a capturing target, an image recognition unit 15 which performs image recognition, a light source recognition unit 16 which performs recognition of a light source, an exposure timing adjustment unit 17 which adjusts each timing of exposure, an external information reception unit 18 which receives external information, and a first exposure control unit 19a and a second exposure control unit 19b which control the exposure of the first imaging unit 11a and the second imaging unit 11b.

The first imaging unit 11a and the second imaging unit 11b are directed in the same direction and capture the same range. For example, the imaging units are separately disposed on right and left in the vicinity of a rear-view mirror of the vehicle to capture the forward side of the vehicle through a front class .

The distance data generation unit 13 generates the distance information such as a parallax image stereoscopically obtained by the first image 12a and the second image 12b. The image recognition unit 15 recognizes an object body such as a traffic signal, a traffic sign, a preceding vehicle, a pedestrian, and a bicycle using at least one of the first image 12a and the second image 12b. As a recognition method, the well-known pattern matching may be used.

The light source recognition unit 16 recognizes a light source from at least one of the first image 12a and the second image 12b, and recognizes whether the recognized light source is a flickering light source. The exposure timing adjustment unit 17 adjusts the exposure timings of the first imaging unit 11a and the second imaging unit 11b based on an image recognition result of the image recognition unit 15 and the external information received by the external information reception unit 18. The first exposure control unit 19a and the second exposure control unit 19b control the exposure timings of the first imaging unit 11a and the second imaging unit 11b according to, for example, an instruction from the exposure timing adjustment unit 17. In addition, the exposure timings are adjusted to be exposure parameters optimized to the image recognition based on the information of the images acquired from the first imaging unit 11a and the second imaging unit 11b. The external information reception unit 18 is connected to a vehicle network 20 and acquires the external information such as vehicle speed information 21, a yaw rate 22, GPS information 23, time information 24, and map data 25 using the external information reception unit 18.

When capturing the traffic signal using an LED as the flickering light source and an indicator such as the traffic sign of an electric light display type, the vehicle image recognition device 10 captures the images at exposure timings of the first imaging unit 11a and the second imaging unit 11b in synchronization with a flickering period of the LED.

Specifically, capturing cycles Tc of the first imaging unit 11a and the second imaging unit 11b are set to be Nc times (an integer) of a flickering cycle Tl, and the exposure timing of the first imaging unit 11a and the exposure timing of the second imaging unit 11b are set to be deviated by Ns (an integer) + 0.5 times the flickering cycle, so that the first image and the second image deviated by a half cycle with respect to the flickering cycle are acquired.

Therefore, the light source in the ON state is recorded in at least any one of the first image 12a and the second image 12b.

The light source recognition unit 16 performs a recognition process in which the light source is extracted from the first image 12a and the second image 12b. Then, in a case where there is a difference equal to or more than a predetermined value between pixel values of the light source extracted from the first image 12a and the second image 12b, it is determined that the subject light source is a flickering light source. In a case where the light source recognition unit 16 determines that the light source is a flickering light source, the exposure timing adjustment unit 17 changes the exposure timing such that the exposure timing of one imaging unit is changed to be matched to the exposure timing of the other imaging unit in which the flickering light source is brightly captured among the first imaging unit 11a and the second imaging unit 11b, and adjusts the exposure timings of the first imaging unit 11a and the second imaging unit 11b to be synchronized. The distance data generation unit generates distance data indicating a distance from the vehicle to the light source based on the first image and the second image captured by the first imaging unit and the second imaging unit.

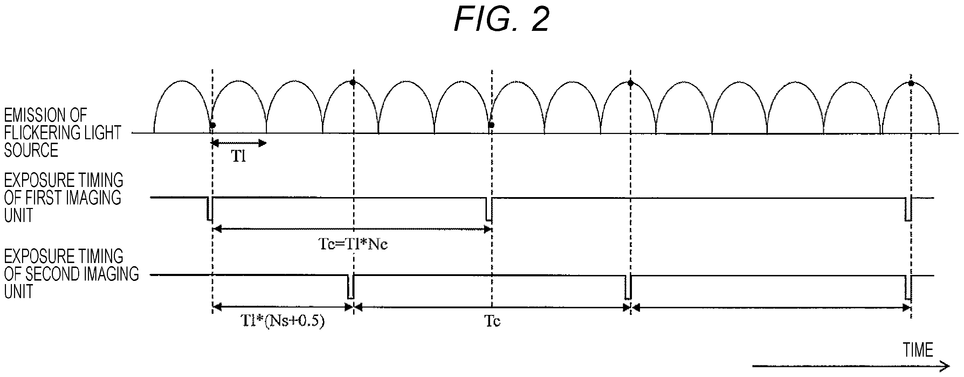

Next, adjusting the exposure timing according to the invention will be described using FIG. 2. FIG. 2 is a diagram illustrating an example of flickering of the flickering light source and exposure timings of the first imaging unit and the second imaging unit. As illustrated in FIG. 2, in a case where the brightness of the LED is increased or decreased in the flickering cycle Tl and the flickering light source emits the light, the exposure timing adjustment unit 17 sets the capturing cycles Tc of the first imaging unit 11a and the second imaging unit 11b to be Nc (an integer) times the flickering cycle Tl. Therefore, even the flickering light source can be captured in the same brightness in every frame, and the brightness of the flickering light source illuminated on each frame can be made constant.

Then, the exposure timing adjustment unit 17 sets a deviation time between the exposure timing of the first imaging unit and the exposure timing of the second imaging unit to be Ns (an integer) + 0.5 times the flickering cycle Tl (Deviation Time = Tl × (Ns + 0.5)) . Therefore, the first imaging unit 11a and the second imaging unit 11b can acquire brightnesses deviated by the half flickering cycle Tl of the LED. Herein, in a case where the exposure timing of one of the first imaging unit 11a and the second imaging unit 11b is a timing when the flickering light source is dark, the flickering light source at the exposure timing of the other imaging unit necessarily comes to be bright since the exposure timing of the other imaging unit is deviated by the half cycle with respect to the flickering cycle Tl.

The light source recognition unit 16 can recognize that the light source is flickering by recognizing that there is a light source in the image obtained by an imaging unit and there is no light source in the image obtained by the other imaging unit. Therefore, it is possible to reliably capture the flickering light source from next time by causing the first imaging unit 11a and the second imaging unit 11b to perform exposure in synchronization with timing when the flickering light source is bright. Therefore, the flickering light source can be stereoscopically viewed, and accurate distance information up to the flickering light source can be obtained.

Even at a timing when the flickering light source is captured in the same brightness by the first imaging unit 11a and the second imaging unit 11b, the traffic signal and the indicator such as the traffic sign using the LED are sufficiently bright compared to the preceding vehicle and a road surface in order to secure visibility. Therefore, even in a case where an optimal exposure is performed in order to recognize the preceding vehicle and the road surface, the flickering light source can be captured with a sufficient pixel value, and can be recognized similarly to an unflickering light source (a light source always turned on).

In this case, the light source can be recognized in synchronization with the exposure timing of any one of the first imaging unit 11a and the second imaging unit 11b. Therefore, the flickering light source can be recognized and the distance information can be obtained by performing the stereoscopic viewing in synchronization with the exposure timing of any one of the imaging units. In other words, the flickering light source can be recognized similarly to a case where the light always turned on is recognized.

Further, as a method of recognizing the light source from an image, any method such as a template matching and a classification using color information may be used as long as a feature can be extracted from the image, and a well-known method may be used.

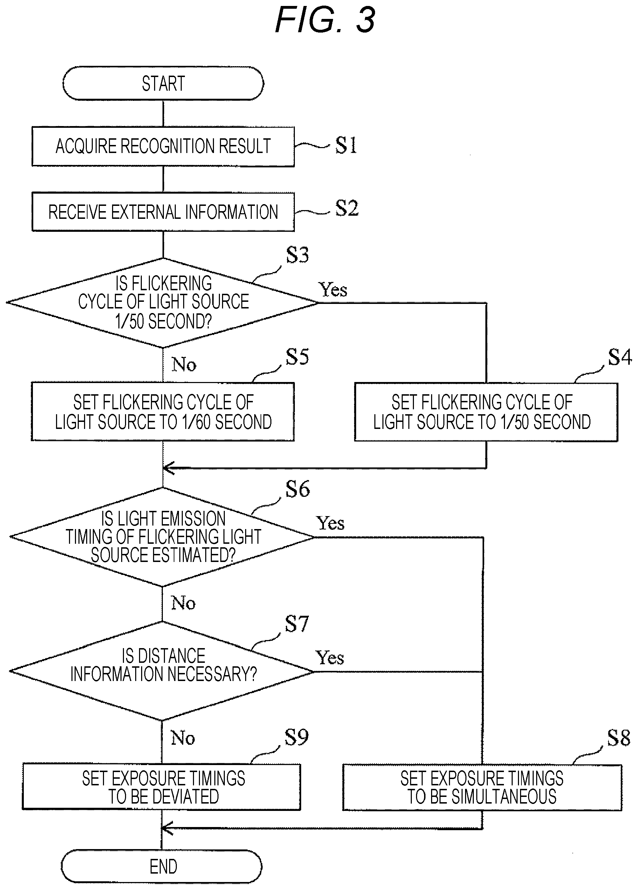

FIG. 3 is a flowchart for describing an exemplary method of setting the exposure timing using the exposure timing adjustment unit. The exposure timing adjustment unit 17 determines whether the stereoscopic distance data is generated based on the recognition result of the image recognition unit 15 and the information acquired from the external information reception unit 18.

First, in Step S1, recognition result information is received from the image recognition unit 15 and the light source recognition unit 16. Next, in Step S2, the external information such as the vehicle speed information 21, the yaw rate 22, the GPS information 23, the time information 24, and the map data 25 linked to the vehicle network 20 are acquired from the external information reception unit 18.

Then, in Step S3, it is determined whether the flickering cycle Tl of the flickering light source is 1/50 second. Since the capturing cycle Tc and a capture deviation time are determined based on the flickering cycle of the flickering light source, the flickering cycle of the flickering light source is necessarily determined.

In Step S3, in a case where it is determined that the flickering cycle of the flickering light source is 1/50 second, the flickering cycle of the flickering light source is set to 1/50 second in Step S4, and if not (that is, it is determined that the flickering cycle is not 1/50 second), the flickering cycle of the flickering power source is set to 1/60 second in Step S5.

At the first time, since the flickering cycle is not clear, the flickering cycle is set to any one of 1/50 and 1/60 second. For example, in a case where the pixel value of the light source is almost the same value in the image captured by the same imaging unit, it can be determined that the capturing cycle is an integer times an intended flickering cycle and the flickering cycle is correctly set.

On the other hand, in a case where the pixel value of the light source is changed by stages in the image captured by the same imaging unit, it is determined that the flickering cycle of the light source is different from the current setting, and thus the setting of the flickering cycle is switched to the other value. The flickering cycle from next time is set to the cycle at the previous time. In a case where it is determined that the flickering cycle is different on the same basis, the setting is switched.

The flickering cycle of the flickering light source may be determined based on a power source frequency of the flickering light source. Since the frequency of the commercial power source is determined depending on regions, the flickering cycle may be determined according to GPS information or a running location of a subject vehicle received in cooperation with a car navigation system. For example, in the case of Japan, the power source frequency in the east region of Japan is 50 Hz, and the power source frequency in the west region of Japan is 60 Hz. Therefore, the power source frequency of the flickering power source can be recognized by specifying the current location of the vehicle based on the external information such as the GPS information 23 and the map data 25. For example, in a case where the power source frequency is 50 Hz, and in a case where the flickering cycle of the flickering light source is 1/50 second and the power source frequency is 60 Hz, the flickering cycle of the flickering light source can be set to 1/60 second.

Next, in Step S6, it is determined whether a light emission timing of the flickering light source is estimated. In a case where the light emission timing of the flickering light source is estimated, the first imaging unit 11a and the second imaging unit 11b are caused to simultaneously perform the capturing in synchronization with the light emission timing of the flickering light source in Step S8. In this case, the flickering light source can reliably perform the capturing using both the first imaging unit 11a and the second imaging unit 11b. Further, the distance information up to the light source can be stereoscopically acquired.

On the other hand, in a case where the light emission timing of the flickering light source is not estimated yet, it is determined whether the distance information is necessary in Step S7. While the acquirement of the distance information using the stereo camera is a feature, the distance information may be not necessary for all the frames. Therefore, the stereoscopic viewing (the imaging units are caused to perform the capturing at the same exposure timing) or the deviating of the exposure timings is selected according to a situation based on the recognition result acquired in Step S1 and the external information acquired in Step S2. In a case where it is determined that the distance information is necessary, the first imaging unit and the second imaging unit are caused to simultaneously perform the capturing in synchronization with the light emission timing of the flickering light source in Step S8. In a case where it is determined that the distance information is not necessary, the capturing is performed by deviating the exposure timings of the first imaging unit and the second imaging unit by a predetermined time in Step S9.

For example, in a case where it is a situation that the distance information from the stereo camera is necessary for the other applications such as a pedestrian detection and a preceding vehicle detection, the capturing is performed at the same exposure timing based on the other applications with priority higher than that of the light emission timing of the flickering light source.

In the in-vehicle image recognition device 10, the preceding vehicle and the pedestrian are recognized from the image, and the result is acquired from the image recognition unit 15. In a case where the preceding vehicle is within a predetermined distance, or in a case where the pedestrian or the bicycle is near the advancing path of the subject vehicle, it is determined that the distance information is necessary for avoiding a risk. In addition, a three-dimensional object can be effectively detected in the stereoscope viewing. Therefore, a counter is provided in the device, and the capturing may be performed alternately using the stereoscopic viewing and the deviating of the exposure timings in a predetermined cycle even in a case where there is no change in an ambient environment.

In a case where the traffic signal or the traffic sign of an electric light display type can be acquired from the map data 25, the exposure timings may be deviated only when the subject vehicle comes close to a predetermined distance or more. It is desirable that a parameter related to the exposure be optimal to recognize the preceding vehicle and the pedestrian. However, for example, in a case where it is determined that the light source is recognized with priority, a shutter opening time may be lengthened.

According to the in-vehicle image recognition device 10 described above, the shutter opening time and a pixel transfer amount of the imaging unit are not changed, so that the performance of the image recognition application is not damaged. In addition, since the extraction process of the light source is performed as in the conventional process, a processing load is not increased. Further, there is no increase in hardware, the recognition performance of the flickering light source can be improved at a low cost.

### Reference Signs List

- 10: in-vehicle image recognition device
- 11a: first imaging unit
- 11b: second imaging unit
- 12a: first image
- 12b: second image
- 13: distance data generation unit
- 14: distance data
- 15: image recognition unit
- 16: light source recognition unit
- 17: exposure timing adjustment unit
- 18: external information reception unit
- 19a: first exposure control unit
- 19b: second exposure control unit
- 20: vehicle network
- 21: vehicle speed information
- 22: yaw rate
- 23: GPS information
- 24: time information
- 25: map data

## Claims

1. An in-vehicle image recognition device (10) which processes an image captured by a pair of imaging units,
wherein the pair of imaging units comprises a first imaging unit (11a) for capturing a first image (12a) and a second imaging unit (11b) for capturing a second image (12b), wherein the second imaging unit (11b) is disposed in parallel to the first imaging unit (11a);
wherein the same light source is captured by the pair of imaging units in a capturing cycle (Tc), the capturing cycle (Tc) being an integer times a predetermined flickering cycle (TI),
wherein the timings of exposure of the pair of imaging units are deviated by (Ns + 0,5) times the flickering cycle (TI) such that the timing of exposure of the second imaging unit (11b) is shifted by (Ns + 0,5) times the flickering cycle (TI) compared to the timing of exposure of the first imaging unit (11a), wherein Ns is an integer,
wherein the in-vehicle image recognition device (10) includes a light source recognition unit (16) configured to perform a recognition process in which the light source is extracted from the first image (12a) and the second image (12b) and
in a case where there is a difference equal to or more than a predetermined threshold between pixel values of the light source extracted from the first image (12a) and the second image (12b), it is determined that the light source is a flickering light source.

2. The in-vehicle image recognition device (10) according to claim 1,
wherein, in a case where the light source is determined as the flickering light source, the timing of exposure of the imaging unit is matched to the timing of exposure of the other imaging unit of which the captured flickering light source is brighter in the pair of imaging units, and distance data up to the light source is generated based on a pair of images captured by the pair of imaging units at the same timing of exposure.

3. The in-vehicle image recognition device (10) according to claim 2,
wherein two types of flickering cycles are set in advance,
wherein, in a case where the pixel value of the light source is constant in the image captured by the same imaging unit, it is determined that the setting of the flickering cycle is correct, and
wherein, in a case where the pixel value of the light source is changed by stages, it is determined that the setting of the flickering cycle is wrong, and the setting of the flickering cycle is switched to the other setting.

4. The in-vehicle image recognition device (10) according to claim 1, further comprising:
a distance data generation unit (13) which is configured to generate distance data such as a parallax image based on the first image (12a) and the second image (12b) captured by the first imaging unit (11a) and the second imaging unit (11b) respectively.

5. The in-vehicle image recognition device (10) according to claim 4, comprising:
an image recognition unit (15) for pattern matching which is configured to perform image recognition to recognize an object body based on the images acquired from the first imaging unit (11 a) and the second imaging unit (11 b) and the distance data;
an external information reception unit (18) which receives information containing at least one of a vehicle speed, a yaw rate, GPS information, time information, and map data; and
an exposure timing adjustment unit (17) configured to adjust the timing of exposure of the first imaging unit (11a) and the second imaging unit (11b) based on a recognition result of the light source recognition unit (16), a recognition result of the image recognition unit (15), and the information of the external information reception unit (18).

6. The in-vehicle image recognition device (10) according to claim 5, comprising:
a first exposure control unit (19 a) and a second exposure adjustment unit (19 b) which are configured to adjust the timing of exposure to be an exposure parameter optimized to the image recognition based on the information of the images acquired by the first imaging unit (11 a) and the second imaging unit (11 b) .

7. The in-vehicle image recognition device (10) according to claim 5,
wherein the exposure timing adjustment unit (17) is configured to determine the flickering cycle of the flickering light source based on a power source frequency of the flickering light source and to adjust the timing of exposure based on the recognition result of the light source recognition unit (16) .

## Patentansprüche

1. Fahrzeuginterne Bilderkennungsvorrichtung (10), die ein Bild verarbeitet, das von einem Paar bildgebender Einheiten erfasst worden ist,
wobei das Paar bildgebender Einheiten eine erste bildgebende Einheit (11a) zum Erfassen eines ersten Bildes (12a) und eine zweite bildgebende Einheit (11b) zum Erfassen eines zweiten Bildes (12b) umfasst, wobei die zweite bildgebende Einheit (11b) parallel zu der ersten bildgebenden Einheit (11a) angeordnet ist;
wobei dieselbe Lichtquelle durch das Paar bildgebender Einheiten in einem Erfassungszyklus (Tc) erfasst wird, wobei der Erfassungszyklus (Tc) einer ganzen Zahl mal einem vorgegebenen Flackerzyklus (TI) entspricht,
wobei die Belichtungszeitpunkte des Paares bildgebender Einheiten um das (Ns + 0,5)-Fache des Flackerzyklus (TI) derart abweichen, dass der Belichtungszeitpunkt der zweiten bildgebenden Einheit (11b) im Vergleich zu dem Belichtungszeitpunkt der ersten bildgebenden Einheit (11a) um das (Ns + 0,5)-Fache des Flackerzyklus (TI) verschoben ist, wobei Ns eine ganze Zahl ist,
wobei die fahrzeuginterne Bilderkennungsvorrichtung (10) eine Lichtquellenerkennungsvorrichtung (16) enthält, die konfiguriert ist, einen Erkennungsvorgang durchzuführen, in dem die Lichtquelle aus dem ersten Bild (12a) und dem zweiten Bild (12b) extrahiert wird, und
dann, wenn eine Differenz größer oder gleich einem vorgegebenen Schwellenwert zwischen Pixelwerten der Lichtquelle ist, die aus dem ersten Bild (12a) und dem zweiten Bild (12b) extrahiert worden sind, bestimmt wird, dass die Lichtquelle eine flackernde Lichtquelle ist.

2. Fahrzeuginterne Bilderkennungsvorrichtung (10) nach Anspruch 1,
wobei dann, wenn die Lichtquelle als die flackernde Lichtquelle bestimmt worden ist, der Belichtungszeitpunkt der bildgebenden Einheit auf den Belichtungszeitpunkt der anderen bildgebenden Einheit abgestimmt wird, deren erfasste flackernde Lichtquelle in dem Paar bildgebender Einheiten heller ist, und Entfernungsdaten bis zu der Lichtquelle basierend auf einem Paar von Bildern, die durch das Paar bildgebender Einheiten an demselben Belichtungszeitpunkt erfasst worden sind, erzeugt werden.

3. Fahrzeuginterne Bilderkennungsvorrichtung (10) nach Anspruch 2,
wobei zwei Typen flackernder Zyklen im Voraus eingestellt worden sind,
wobei dann, wenn der Pixelwert der Lichtquelle in dem Bild, das von derselben bildgebenden Einheit erfasst worden ist, konstant ist, bestimmt wird, dass die Einstellung des Flackerzyklus korrekt ist, und
wobei dann, wenn der Pixelwert der Lichtquelle in Stufen verändert wird, bestimmt wird, dass die Einstellung des Flackerzyklus falsch ist, und die Einstellung des Flackerzyklus auf die andere Einstellung geschaltet wird.

4. Fahrzeuginterne Bilderkennungsvorrichtung (10) nach Anspruch 1, die ferner Folgendes umfasst:
eine Entfernungsdatenerzeugungseinheit (13), die konfiguriert ist, Entfernungsdaten wie zum Beispiel ein Parallaxenbild basierend auf dem ersten Bild (12a) und dem zweiten Bild (12b), die von der ersten bildgebenden Einheit (11a) bzw. der zweiten bildgebenden Einheit (11b) erfasst worden sind, zu erzeugen.

5. Fahrzeuginterne Bilderkennungsvorrichtung (10) nach Anspruch 4, die Folgendes umfasst:
eine Bilderkennungseinheit (15) zum Musterabgleich, die konfiguriert ist, eine Bilderkennung durchzuführen, um basierend auf den Bildern, die von der ersten bildgebenden Einheit (11a) und der zweiten bildgebenden Einheit (11b) aufgenommen worden sind, und basierend auf den Entfernungsdaten einen Objektkörper zu erkennen;
eine Einheit (18) zum Empfangen von externen Informationen, die Informationen empfängt, die eine Fahrzeuggeschwindigkeit, eine Giergeschwindigkeit, GPS-Informationen, Zeitinformationen und/oder Kartendaten beinhalten; und
eine Belichtungszeitpunkt-Einstelleinheit (17), die konfiguriert ist, den Belichtungszeitpunkt der ersten bildgebenden Einheit (11a) und der zweiten bildgebenden Einheit (11b) basierend auf einem Erkennungsergebnis der Lichtquellenerkennungseinheit (16), einem Erkennungsergebnis der Bilderkennungseinheit (15) und den Informationen der Einheit (18) zum Empfangen von externen Informationen einzustellen.

6. Fahrzeuginterne Bilderkennungsvorrichtung (10) nach Anspruch 5, die Folgendes umfasst:
eine erste Belichtungssteuerungseinheit (19a) und eine zweite Belichtungssteuerungseinheit (19b), die konfiguriert sind, basierend auf den Informationen der Bilder, die von der ersten bildgebenden Einheit (11a) und der zweiten bildgebenden Einheit (11b) aufgenommen worden sind, den Belichtungszeitpunkt so einzustellen, dass er einem Belichtungsparameter entspricht, der für die Bilderkennung optimiert ist.

7. Fahrzeuginterne Bilderkennungsvorrichtung (10) nach Anspruch 5,
wobei die Belichtungszeitpunkt-Einstelleinheit (17) konfiguriert ist, den Flackerzyklus der flackernden Lichtquelle basierend auf einer Leistungsquellenfrequenz der flackernden Lichtquelle zu bestimmen und den Belichtungszeitpunkt basierend auf dem Erkennungsergebnis der Lichtquellenerkennungseinheit (16) einzustellen.

## Revendications

1. Dispositif de reconnaissance d'image monté sur véhicule (10) qui traite une image capturée par une paire d'unités d'imagerie,
dans lequel la paire d'unités d'imagerie comprend une première unité d'imagerie (11a) destinée à capturer une première image (12a) et une seconde unité d'imagerie (11b) destinée à capturer une seconde image (12b), la seconde unité d'imagerie (11b) étant disposée en parallèle à la première unité d'imagerie (11a) ;
dans lequel la même source de lumière est capturée par la paire d'unités d'imagerie dans un cycle de capture (Tc), le cycle de capture (Tc) étant un nombre entier fois un cycle de vacillement prédéterminé (TI),
dans lequel les temporisations d'exposition de la paire d'unités d'imagerie sont déviées à raison de (Ns + 0,5) fois le cycle de vacillement (TI) de sorte que la temporisation d'exposition de la seconde unité d'imagerie (11b) est décalée à raison de (Ns + 0,5) fois le cycle de vacillement (TI) par comparaison à la temporisation d'exposition de la première unité d'imagerie (11a), Ns étant un nombre entier,
dans lequel le dispositif de reconnaissance d'image monté sur véhicule (10) inclut une unité de reconnaissance de source de lumière (16) configurée pour effectuer un traitement de reconnaissance dans lequel la source de lumière est extraite à partir de la première image (12a) et de la seconde image (12b), et
dans un cas où il y a une différence égale ou supérieure à un seuil prédéterminé entre des valeurs de pixels de la source de lumière extraite à partir de la première image (12a) et de la seconde image (12b), il est déterminé que la source de lumière est une source de lumière vacillante.

2. Dispositif de reconnaissance d'image monté sur véhicule (10) selon la revendication 1,
dans lequel, dans un cas où la source de lumière est déterminée comme étant la source de lumière lumineuse, la temporisation d'exposition de l'unité d'imagerie est accordée à la temporisation d'exposition de l'autre unité d'imagerie dont la source de lumière vacillante capturée est plus brillante dans la paire d'unités d'imagerie, et des données de distance jusqu'à la source de lumière sont générées sur la base d'une paire d'images capturées par la paire d'unités d'imagerie à la même temporisation d'exposition.

3. Dispositif de reconnaissance d'image monté sur véhicule (10) selon la revendication 2,
dans lequel deux types de cycle de vacillement sont réglés en avance, dans lequel, dans un cas où la valeur de pixel de la source de lumière est constante dans l'image capturée par la même unité d'imagerie, il est déterminé que le réglage du cycle de vacillement est correct, et
dans lequel, dans un cas où la valeur de pixel de la source de lumière est changée par paliers, il est déterminé que le réglage du cycle de vacillement est incorrect, et le réglage du cycle de vacillement est commuté vers l'autre réglage.

4. Dispositif de reconnaissance d'image monté sur véhicule (10) selon la revendication 1, comprenant en outre :
une unité de génération de données de distance (13) qui est configurée pour générer des données de distance telles qu'une image de parallaxe sur la base de la première image (12a) et de la seconde image (12b) capturées par la première unité d'imagerie (11a) et la seconde unité d'imagerie (11b) respectivement.

5. Dispositif de reconnaissance d'image monté sur véhicule (10) selon la revendication 4, comprenant :
une unité de reconnaissance d'image (15) pour une correspondance de motifs qui est configurée pour effectuer une reconnaissance d'image afin de reconnaître un corps d'objet sur la base des images acquises depuis la première unité d'imagerie (11a) et de la seconde unité d'imagerie (11b) et des données de distance ;
une unité de réception d'information externe (18) qui reçoit une information contenant au moins une information parmi une vitesse de véhicule, un taux de lacet, une information GPS, une information temporelle et des données cartographiques ; et
une unité d'ajustement de temporisation d'exposition (17) configurée pour ajuster la temporisation d'exposition de la première unité d'imagerie (11a) et de la seconde unité d'imagerie (11b) sur la base d'un résultat de reconnaissance de l'unité de reconnaissance de source de lumière (16), d'un résultat de reconnaissance de l'unité de reconnaissance d'image (15) et de l'information de l'unité de réception d'information externe (18).

6. Dispositif de reconnaissance d'image monté sur véhicule (10) selon la revendication 5, comprenant :
une première unité de commande d'exposition (19a) et une seconde unité d'ajustement d'exposition (19b) qui sont configurées pour ajuster la temporisation d'exposition pour qu'elle soit un paramètre d'exposition optimisé pour la reconnaissance d'image sur la base de l'information des images acquises par la première unité d'imagerie (11a) et la seconde unité d'imagerie (11b).

7. Dispositif de reconnaissance d'image monté sur véhicule (10) selon la revendication 5,
dans lequel l'unité d'ajustement de temporisation d'exposition (17) est configurée pour déterminer le cycle de vacillement de la source de lumière vacillante sur la base d'une fréquence de source de puissance de la source de lumière vacillante, et pour ajuster la temporisation d'exposition sur la base du résultat de reconnaissance de l'unité de reconnaissance de source de lumière (16).
